# EUROPEAN PATENT APPLICATION

(11) **EP 0 948 227 A1**
(43) Date of publication of application: **06.10.1999**
(21) Application number: 99302189.8
(22) Date of filing: 22.03.1999
(51) Int. Cl.: H04Q 7/34

(54) **Calibration technique**

(30) Priority: 03.04.1998 US 54678
(71) Applicant: LUCENT TECHNOLOGIES INC., Murray Hill, New Jersey 07974-0636 (US)
(72) Inventor: Nitz, William Allen, Rockaway, New Jersey 07866 (US); Simmons, Michael Ralph, Ft. Lee, New Jersey 07024 (US); Rooney, Allen J., Madison, New Jersey 07940 (US)
(74) Representative: Watts, Christopher Malcolm Kelway, Dr.

(57) **Abstract**

An operational parameter of a first element is based on information about a second element, where the information is received by a means external to the first element, and where the information defines at least how one characteristic of the second element changes as a function of at least one variable parameter. For example, in an illustrative embodiment, an adjustment is made to the output power of an output stage of a radio transmitter (21) based on information about a transmit filter (41) located in the signal path between the output stage and an antenna (51) where the information is received from a remote memory (41I), and where the information defines how the transfer function of the transmit filter varies as a function of temperature. Advantageously, whenever the transmit filter (41) is replaced and/or whenever there is a change in the temperature such that the transfer function of the transmit filter (41) would also change, the output stage is able to use the information to adjust its own output power.

## Description

### Background of the Invention

The present invention relates to the calibration of components in a multi-component system.

Various components of multi-component systems may require calibration from time to time. For example, in a wireless base station the output power level of a radio frequency (RF) output stage may need to be adjusted as a function of the characteristics of a transmit amplifier and/or transmit filter interposed between the output stage and the antenna. As long as the operating parameters of the overall transmit chain remain static, no further adjustments are typically necessary. However, various parameters may change over time. These may include environmental parameters such as temperature and/or operational parameters such as the frequency of the wireless channel. Such changes may necessitate adjustment of, for example, the output power level necessary to achieve the desired RF power level at the antenna.

Such adjustments can be made manually, taking the expected worse case into account. Disadvantageously, however, this will typically mean that, at least at some points in time, the transmit power level will be higher or lower than what it should be since repeated deployment of a craftsperson to make continual adjustments is impractical. A more sophisticated approach is to provide a closed-loop, feedback path wherein the transmit power level is monitored at the antenna and a control signal indicative of that level is fed back to the output stage. The latter, in response, can then adjust its output level until such time as the desired transmit power level at the antenna is achieved. This approach works very well. However, it can be quite expensive and/or complex to implement, particularly if a high degree of accuracy is required. Moreover, the components used in the feedback loop, such as couplers that would be used to tap off a portion of the transmit energy for use in the feedback loop, may themselves be subject to the types of variations (e.g. environmental and operational variations) mentioned above, giving rise to inaccuracies in the feedback loop. And while those issues can also be addressed through various known calibration techniques, yet additional equipment expense and/or complexity may result.

Another option is to employ elements which are self-adjusting, but those too are expensive. Or, one might think to employ elements whose characteristics vary predictably, if at all, with changes in environmental and/or operational parameters so that such changes can be anticipated and compensated for reliably. Not only do such devices tend to be more complex and expensive, but this approach, in order to be effective over the long term, would require that if the device ever needs to be replaced then either the replacement device would have to be assured to have the same characteristics as the original―something that may not be possible―or that the system then be recalibrated which adds to the cost of maintaining the system.

Calibration issues may also arise vis-à-vis the base station receiver. For example, the receiver needs to calculate, for various purposes, the power level of an RF signal that appears at the receive antenna. The accuracy of that calculation, after an initial calibration, may be negatively affected by various environmental and/or operational parameter changes affecting elements (such as couplers and filters) interposed between the antenna and the receiver. However, the above-noted drawbacks of the various prior art solutions outlined above once again apply.

### Summary of the Invention

The limitations of the various prior art approaches are overcome in accordance with the present invention by adjusting an operational parameter (e.g., the power) of a first element (e.g. the output stage) based on information about a second element (e.g., the transmit filter) received from means external to the first element. In preferred embodiments, in particular, the information is data carried along with the element itself as a single installable piece part. The data, more particularly, is information defining at least how one characteristic of the second element changes as a function of at least one variable parameter. For example, that characteristic might be the way in which the attenuation of the transmit filter varies with frequency, i.e., its transfer function, or temperature. Thus, whenever the second element is replaced and/or whenever there is a change in an operating or environmental parameter of the system such that the specific manner in which the second element operates would also change, the first element is able to use the information received in order to adjust its own operational parameter appropriately.

### Brief Description of the Drawing

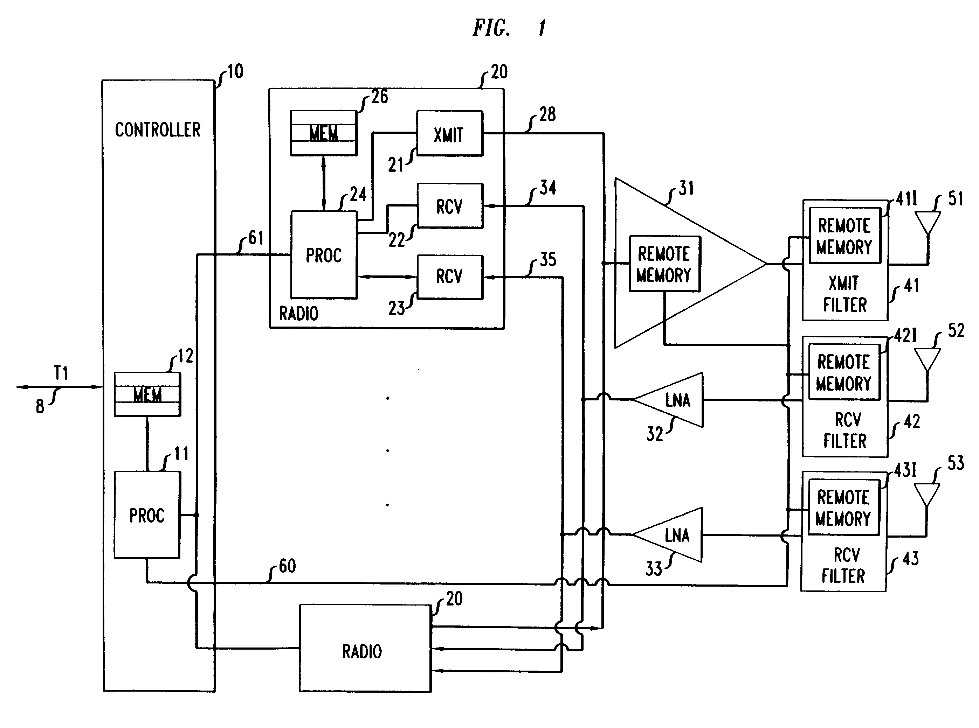

FIG. 1 is a block diagram of a wireless base station in which the invention is illustratively implemented.

### Detailed Description

The wireless base station of FIG. 1 includes a controller 10 which interfaces with a T1 line 8 connecting the base station to the public switched telephone network. Controller 10 controls a plurality of wireless transmitter/receivers, or radios, 20, each of which operates in a particular wireless channel comprising a transmit band and a receive band. The RF outputs of the transmitters 21 of each of the radios 20 are combined on lead 28 and applied to a high-power transmit amplifier 31 whose output, in turn, is bandpass filtered by transmit filter 41 and thereupon applied to transmit antenna 51.

Incoming signals are received by a pair of receive antennas 52 and 53, two antennas being used to provide so-called diversity gain. Antennas 52 and 53 feed their signals to receiver filters 42 and 43, respectively. The outputs of filters 42 and 43 are amplified by low-noise receive amplifiers 32 and 33, respectively. The output of amplifier 32 on lead 34 is applied to receiver 22 of each radio 20, and the output of amplifier 33 on lead 35 is applied to receiver 23 of each radio 20.

Each radio 20 includes a processor 24 which controls the operation of its transmitter 21 and receivers 22 and 23 and various other elements (not shown). One aspect of that control is to set the various output power levels that transmitter 21 may be called upon to produce at various points in its operation, in well known fashion. The output power levels of transmitter 21 are typically adjusted when, for example, the base station was initially installed or during a scheduled maintenance session thereafter. The adjustment is such as to ensure that the signal caused to appear at antenna 51 by transmitter 21 and the intervening elements has a precisely determined signal strength at the transmitter's operating transmitter frequency.

Things can change, however. For example, the channel, and thus the transmit frequency, at which a radio operates can be changed. This may result in a change in the signal strength of the antenna signal because an element such as transmit filter 41 may provide a slightly different attenuation at the new frequency. In order to account for such a change, processor 24 has available to it in a memory 26 current information defining how, in this example, the attenuation of transmit filter 41 varies with the frequency, that is, its transfer function. Thus whenever the operating frequency of transmitter 21 is changed, processor 24 is able to use that information to cause the output power of transmitter 21 to be changed in such a way as to ensure that the signal at antenna 51 has the desired signal strength.

In accordance with the invention, the information in memory 26 about the characteristics of transmit filter 41 was received by radio 20 and loaded into memory 26 from means external to the radio. In preferred embodiments, in particular, the information about the transfer function of transmit filter 41 comprises data stored in a memory 411 that is carried along with transmit filter 41 itself as a single installable piece part. Thus, whenever an element such as transmit filter 41 is replaced and/or whenever there is a change in a variable parameter of the system (e.g. the transmit frequency) such that the specific manner in which another element operates would also change (e.g. a change in the output power level of transmitter 21), then the output power level is adjusted based on information received from means external to transmitter 21 (e.g. through processor 11, bus 60 and remote memory 411).

To illustrate, when transmit filter 41 is replaced with a new filter, processor 11 of controller 10, which periodically polls the remote memories connected to it through bus 60, retrieves the information from the remote memory of the replacement, stores the information in its local memory 12, and sends the information to radio 20 through bus 61. The information is then stored in memory 26 by processor 24 which is operable to use that stored information to adjust the output power of transmitter 21 as described above.

Things can also change in the path of the received signal. For example, a change in the frequency of the signal received at antenna 52 and 53 may cause processor 24 to miscalculate the power level of the RF signal received at antennas 52 and 53 because elements such as receiver filters 42 and 43 may provide a slightly different attenuation at the new frequency. In order to account for such a change, processor 24 has available to it in memory 26 current information defining how, in this example, the attenuation of receiver filters 42 and 43 change with frequency, that is, their transfer functions. As a result, whenever the frequency of the received signal is changed, processor 24 is able to use the information stored in memory 26 to adjust its calculation of the received-signal power level, thus enabling processor 24 to accurately determine, for example, the distance the signal traveled before it reached the base station, or the location of the transmitter. The method of making such calculations based on the received signal strength is well known in the art.

In accordance with the principles of the present invention, as described above, the information stored in memory 26 was received by means external to radio 20. And, in preferred embodiments, the information about the transfer function of receiver filters 42 and 43 comprises data, stored in remote memories 421 and 431, respectively, that is carried along with receiver filters 42 and 43 themselves as a single piece part. Thus, whenever an element such as receiver filter 42 and/or 43 is replaced or whenever there is a change in a variable parameter (e.g. the frequency of the received signal) such that the specific manner in which the receiver filters 42 and/or 43 operate would also change (e.g. a change in the transfer function), then the operation of another element (e.g. processor 24's calculation of the signal power received at antennas 52 and 53) is adjusted based on the information received from means external to processor 24 (e.g. processor 11, bus 60 and remote memories 421 and/or 431).

In preferred embodiments, remote memories 411, 421 and 431 are memories selected from the Add Only Memory family of Erasable-Programmable-Read-Only-Memories (EPROM's) provided by Dallas Semiconductor. Such a memory, in accordance with the present invention, can be, for example, combined and/or attached to the element for which it contains information so that the combination is a single piece-part, or such a memory can be, for example, provided as a separate piece-part.

For clarity of explanation, the embodiment of the present invention shown in FIG. 1 and described above is merely illustrative. Thus, for example, it will be appreciated by those skilled in the art that the block diagram shown and described herein represents a conceptual view of illustrative circuitry embodying the principles of the invention. The functions of the various elements shown in FIG. 1 could be implemented by one or more programmed processors, digital signal processing (DSP) chips, or the like rather than individual hardware elements. Similarly, the elements (e.g. transmit filter 41, receiver filters 42 and 43, and transmit amplifier 31) connected between radio 20 and antennas 52 -53 are merely illustrative of the types of second elements that the information received through an external means to a first element (e.g. radio 20), in accordance with the present invention, defines how one characteristic of the second element changes as a function of at least one variable parameter (e.g. frequency and temperature). Moreover, remote memories 411, 421 and 431, and bus 60 are merely illustrative of the external means for providing the information about the second element to the first element in accordance with the principles of the present invention.

In the claims hereof any element expressed as a means for performing a specified function is intended to encompass any way of performing that function including, for example, a) a combination of circuit elements which performs that function or b) software in any form (including, therefore, firmware, microcode or the like) combined with appropriate circuitry for executing the software to perform the function. The invention defined by such claims resides in the fact that the functionalities provided by the various recited means are combined and brought together in the manner in which the claims call for. Applicant thus regards any means which can provide those functionalities as equivalent as those shown herein.

It will be appreciated by those skilled in the art that they will be able to devise various arrangements which, though not explicitly shown or described herein, embody the principles of the present invention and thus are within its scope.

## Claims

1. A method comprising the step of adjusting an operational parameter of a first element based on information about a second element received from means external to the first element, said information defining at least how one characteristic of the second element changes as a function of at least one variable parameter.

2. The method of claim 1 wherein said first element is an output stage of a radio, said operational parameter is output power from said output stage, said second element is a transmit filter positioned in a signal path between said output stage and an antenna, said information defining how the transfer function of said transmit filter varies as a function of a variable parameter.

3. The method of claim 2 wherein said variable parameter is a parameter select from the group comprising operational parameters and environmental parameters.

4. The method of claim 3 wherein said operational parameters include frequency and power level.

5. The method of claim 3 wherein said environmental parameters include temperature and humidity.

6. The method of claim 5 wherein said external means comprises a remote memory containing said information.

7. The method of any of claims 1 to 5 wherein said external means comprises a processor coupled to a remote memory having said information stored therein.

8. The method of claim 7 wherein said remote memory is combined with said second element as a single piece part.

9. The method of claim 7 wherein said remote memory is a separate piece part from said second element.

10. The method of any of claims 6 to 9 wherein said remote memory is an Erasable-Programmable-Read-Only-Memory (EPROM).

11. The method of claim 10 wherein said EPROM is an Add Only Memory.

12. An apparatus comprising:
a first element; and
means arranged to carry out a method as claimed in any of the preceding claims for adjusting an operational parameter of said first element.
